# EUROPÄISCHE PATENTSCHRIFT

(11) **EP 3 038 492 B1**
(45) Veröffentlichungstag und Bekanntmachung des Hinweises auf die Patenterteilung: **08.02.2017**
(21) Anmeldenummer: 14776575.4
(22) Anmeldetag: 29.08.2014
(51) Int. Cl.: A45D 31/00, B29C 70/40

(54) **VERFAHREN ZUR HERSTELLUNG VON FINGERNAGEL-TIPS**
METHOD FOR PRODUCING FINGERNAIL TIPS
PROCÉDÉ DE FABRICATION DE FAUX ONGLES

(30) Priorität: 30.08.2013 DE 102013109477
(43) Veröffentlichungstag der Anmeldung: 06.07.2016
(73) Patentinhaber: Hogg, Hermann, 79361 Sasbach (DE)
(72) Erfinder: REHWINKEL, Carsten, 77974 Meissenheim (DE)
(74) Vertreter: Habbel, Ludwig
(86) Internationale Anmeldenummer: PCT/EP2014/002348
(87) Internationale Veröffentlichungsnummer: WO 2015/028155

(56) Entgegenhaltungen:
- DE-B3-102012 015 207
- US-B1- 7 185 660

## Beschreibung

Die Erfindung betrifft ein Verfahren zur Herstellung von Fingernagel-Tips.

Aus der WO 2012/103 880 A2 ist ein gattungsgemäßes Verfahren bekannt. Die Fingernagel-Tips werden beim Aufbau eines künstlichen Fingernagels verwendet. Sie dienen dazu, den vorhandenen, natürlichen Fingernagel zu verlängern und damit eine Basis zu schaffen, auf welcher anschließend mittels eines aushärtbaren Gels der restliche Aufbau und die endgültige Formgebung des künstlichen Fingernagels erfolgt. Im Vergleich zur Verwendung von Schablonen, die zur Abstützung des aufzubringenden Gels bis zu dessen Aushärtung dienen, ermöglichen die Fingernagel-Tips eine schnellere und unkompliziertere, leichter durchzuführende Arbeitsweise.

Zur Herstellung der Fingernagel-Tips wird bei diesem Stand der Technik eine Form verwendet, in welche Fiberglas-Verstärkungsfasern eingelegt werden, wobei anschließend ein Harz aufgebracht wird. Schließlich wird das Harz in die Verstärkungsfasern eingepresst, indem ein zweites, komplementär geformtes Formteil gegen das erste Teil der Form gepresst wird, so dass Harz und Verstärkungsfasern zwischen diesen beiden Teilen der Form miteinander verpresst werden und das Harz in die Verstärkungsfasern eindringt.

Auch aus der DE 10 2012 015 207 B3 ist ein gattungsgemäßes Verfahren zur Herstellung eines künstlichen Nagelpräparats bekannt. Bei diesem Verfahren wird ein textiles Flächengebilde als Bahn von einer Rolle abgezogen, in ein Tauchbad geführt, und so mit einem flüssigen Kunstharz getränkt. Anschließend wird es wellenförmig geformt und gehärtet, so dass Rinnen erzeugt werden, die sich über die Breite der Bahn erstrecken, also quer zur Förderrichtung der Bahn verlaufen. Diese Rinnen werden von der Bahn abgetrennt und bilden nun Nagelpräparat-Rohlinge. Diese Nagelpräparat-Rohlinge werden dann in einzelne Nagelpräparate zerteilt.

Der Erfindung liegt die Aufgabe zugrunde, ein gattungsgemäßes Verfahren zur Herstellung von Fingernagel-Tips dahingehend zu verbessern, dass dieses die Herstellung großer Mengen von Fingernagel-Tips auf wirtschaftliche Weise ermöglicht.

Diese Aufgabe wird durch das Verfahren nach Anspruch 1 gelöst. Vorteilhafte Ausgestaltungen des Verfahrens sind in den Unteransprüchen angegeben.

Die Erfindung schlägt mit anderen Worten vor, ein kontinuierliches oder quasi-kontinuierliches Produktionsverfahren zu ermöglichen. Hierzu werden die Verstärkungsfasern als Band bereit gestellt, welches mit einer bestimmten Fördergeschwindigkeit in seiner Längsrichtung bewegt wird. Dieses Band von Verstärkungsfasern wird mit einem Kunststoff getränkt, beispielsweise mit einem Kunstharz, so dass das Band nun zumindest die beiden Bestandteile der Verstärkungsfasern und des Kunststoffs enthält und fachüblich als "Prepreg" bezeichnet werden kann.

Das Band wird wenigstens einseitig abgedeckt, so dass die empfindlichen Verstärkungsfasern, die z. B. in Form eines Vliesstoffs vorliegen und durch mechanische Beanspruchungen wie z. B. Zugkräfte nur gering belastbar sind, beispielsweise auf einem mechanisch stabileren Material aufliegen und mitsamt diesem transportiert oder zu einer Rollenware konfektioniert werden können.

Das abgedeckte und mit dem Kunststoff getränkte Band wird nun geformt, so dass es in eine Krümmung gebogen wird, welche im Wesentlichen der Krümmung eines natürlichen Fingernagels oder Fußnagels entspricht. Auch die Formgebung und Aushärtung des Kunststoffs erfolgt während der Förderbewegung des Bandes, also im Sinne einer kontinuierlichen Produktion.

Die Formung einer Rinne, die im Stand der Technik als Nagelpräparat-Rohling bezeichnet wird, erfolgt gemäß dem vorliegenden Vorschlag in Längsrichtung des Bandes, so dass eine kontinuierliche Fertigung unterstützt wird und ein praktisch endloser Nagelpräparat-Rohling geschaffen wird, der nämlich genauso lang ist wie z. B. die Rollenware, die zur Schaffung des Bandes aus Verstärkungsfasern dient.

Aus dieser quasi endlosen Rinne werden vorschlagsgemäß die Fingernagel-Tips in einer Schneidstation aus dem Band herausgeschnitten. Durch die Länge des Fingernagel Rohlings, also der Rinne, kann eine große Stückzahl an Fingernagel-Tips aus ihm herausgeschnitten werden. Eine wirtschaftlich, kontinuierliche und automatische Herstellung der Fingernagel-Tips wird auf diese Weise unterstützt. Das Schneiden kann beispielsweise mittels eines Stanzvorgangs erfolgen und entweder kontinuierlich erfolgen, mittels eines rotierenden Schneidwerkzeugs, welches an seinem Umfang wenigstens ein Schneidorgan aufweist. Das Schneiden kann alternativ dazu "quasi-kontinuierlich" erfolgen, nämlich mit einem intermittierenden, beispielsweise oszillierenden Schneidwerkzeug, welches durch seine Hin- und Herbewegungen praktisch ständig in Bewegung ist. Bei diesem quasikontinuierlichen Scheidvorgang kann die Rinne im Sinne einer möglichst kontinuierlichen Produktion vorteilhaft nicht in gleicher Weise intermittierend transportiert werden, sondern vielmehr kontinuierlich durchlaufen und lediglich in der Schneidstation dem Schneidwerkzeug intermittierend zugeführt werden, wie weiter unten noch näher erläutert wird.

Vorschlagsgemäß ist anschließend eine vollautomatische Sortierung der hergestellten Fingernagel-Tips vorgesehen. Als Sortierung wird in diesem Zusammenhang bezeichnet, dass eine bestimmte Zuordnung der hergestellten Fingernagel-Tips erfolgt. Beispielsweise können die hergestellten Fingernagel-Tips gezählt und jeweils eine bestimmte Stückzahl in einen Behälter abgepackt werden, z. B. in Beutel, Dosen, Kästen oder dergleichen, so dass jedem Behälter eine bestimmte Anzahl von Tips zugeordnet wird. Alternativ dazu, die Tips zu zählen, kann die Zuordnung gewichtsabhängig erfolgen, indem die hergestellten Fingernagel-Tips gewogen werden und jeweils eine bestimmte Gewichtsmenge in eine Verpackung bzw. in einen Behälter abgepackt wird.

Wenn die Tips in unterschiedlichen Größen hergestellt werden, kann die vollautomatische Sortierung zusätzlich auch größenabhängig erfolgen: jeweils eine vorbestimmte Anzahl oder Gewichtsmenge von Tips einer bestimmten Größe wird in diesem Fall separat von Tips anderer Größen abgepackt. Dabei kann vorgesehen sein, Tips unterschiedlicher Größen in unterschiedliche Fächer einer gemeinsamen Verpackung bzw. eines gemeinsamen Behälters zu sortieren: Z. B. kann in so genannter Sortimentskasten mit einer Mehrzahl einzelner Fächer in Förderrichtung der Tips hinter der Schneidstation bereitgestellt werden, z. B. unterhalb der erwähnten Stanze. Die Fingernagel-Tips werden von der Schneidstation in den Sortimentskasten gefördert, z. B. indem sie schwerkraftunterstützt aus der Stanze in den Sortimentskasten fallen, und zwar in ein vorbestimmtes Fach. Hierzu kann der Sortimentskasten bewegt werden, so dass das zu füllende Fach unter einer Schütte, Rutsche oder einer ähnlichen Fördereinrichtung angeordnet ist, welches die Tips von der Schneideinrichtung zu der Verpackung fördert. Oder die Fördereinrichtung kann beweglich sein und jeweils von einem ersten zu einem anderen Fach des Sortimentskasten bewegt werden. Jedenfalls können unterschiedlich große Fingernagel-Tips in unterschiedliche Verpackungen bzw. unterschiedliche Fächer derselben Verpackung vollautomatisch einsortiert werden.

Die korrekte Dosierung der Fingernagel-Tips in den einzelnen Verpackungen bzw. deren Fächern kann mittels eines automatischen Zählwerks sichergestellt werden, welches die aus der Schneidstation gelangenden Fingernagel-Tips automatisch zählt, oder mittels einer Waage, auf welche die Fingernagel-Tips zunächst gelangen und dort kumuliert werden, und welche regelmäßig entleert wird, wenn sich eine gewichtsbestimmte Menge an Fingernagel-Tips angesammelt hat.

Im Rahmen des vorliegenden Vorschlages werden die herzustellenden Tips als "Fingernagel"-Tips bezeichnet, weil die künstlichen Nägel in überwiegender Mehrzahl auf natürlichen Fingernägeln aufgebaut werden. Aber auch auf Fußnägeln können künstliche Nägel aufgebaut werden und die vorschlagsgemäß herzustellenden Tips eignen sich je nach ihren Abmessungen auch dazu. Zur Vereinfachung werden die Tips nachfolgend jedoch als "Fingernagel-Tips" bezeichnet, ohne dass die Anwendung der Tips auf die Nägel von Fingern beschränkt ist.

Dementsprechend kann in der Formstation vorgesehen sein, dass die dem Band dort vermittelte Krümmung der Krümmung eines Fingernagels oder eines Fußnagels entspricht. Durch diese gekrümmte Formgebung des Fingernagel-Tips wird bei der späteren Herstellung eines künstlichen Nagels eine möglichst spannungsarme Anlage des Tips an dem natürlichen Nagel erreicht. Dies erhöht einerseits den Tragekomfort und begünstigt andererseits einen möglichst zuverlässigen Halt des künstlichen Nagels an dem natürlichen Nagel. Zudem werden durch eine lückenlose, dichte Anlage des Tips an dem natürlichen Nagel Hohlräume vermieden, die ansonsten Keimnester bilden könnten, so dass durch diese dichte Anlage beispielsweise die Gefahr von Infektionen oder Pilzerkrankungen verringert werden kann.

In dieser vorgegebenen Form, die dem Band in der Formstation vermittelt wird, wird der Kunststoff ausgehärtet, so dass anschließend das Band die vorgegebene Form beibehält und insofern formstabil geworden ist. Dabei behalten die Verstärkungsfasern mit dem ausgehärteten Kunststoff eine elastische Verformbarkeit bei. Diese erleichtert die passgenaue Anlage des Tips an einen natürlichen Fingernagel. Die Dauer des Aushärtevorgangs bemisst sich nach diesem zu erreichenden Ziel, das Band anschließend ausreichend formstabil auszugestalten, so dass es dann die Formstation verlassen kann. Dementsprechend kann vorgesehen sein, dass die Aushärtung des Kunststoffs in der Formstation nicht vollständig erfolgen muss, sondern zumindest so weit, dass das geformte Band die Formstation formstabil bzw. formbeständig verlassen kann.

Gegebenenfalls kann wirtschaftlich vorteilhaft erst im Anschluss an die Formstation eine letzte Nachhärtung des Kunststoffs bis zu seiner vollständigen Aushärtung erfolgen. Wenn die Aushärtung des Kunststoffs beispielsweise thermisch erfolgt, kann für die Nachhärtung die Eigentemperatur genutzt werden, welche das Band beim Durchlaufen der Formstation und bei seiner Erhitzung angenommen hat. Dabei kann der Wärmeinhalt nicht nur der Verstärkungsfasern und des Kunststoffs, sondern auch der beiden Abdeckungen ausgenutzt werden. Diese Eigentemperatur kann beim Verlassen der Formstation eine restliche, endgültige Aushärtung des Kunststoffs bewirken.

Zu Gunsten einer möglichst hohen Prozesssicherheit kann vorgesehen sein, den Kunststoff in der Formstation vollständig auszuhärten, da auf diese Weise zuverlässig sichergestellt werden kann, dass das Band seine gewünschte Formstabilität erreicht hat. Es kann allerdings mit genauso guter Prozesssicherheit vorgesehen sein, den Kunststoff in der Form nicht vollständig auszuhärten, die vollständige Aushärtung jedoch gezielt durch eine Nachhärtung in einer der Form nachgeschalteten Nachhärtestation zu gewährleisten. Auf diese Weise besteht auch die Möglichkeit, zwei unterschiedliche Härteverfahren miteinander zu kombinieren, indem in der Formstation ein anderes Härteverfahren angewandt wird als in der Nachhärtestation.

Da hinter der Formstation der Kunststoff ausreichend ausgehärtet ist, wird nun - und vorteilhaft insbesondere erst dann, wenn der Kunststoff vollständig ausgehärtet ist - die Abdeckung entfernt, so dass nun das geformte Band nur noch aus den Verstärkungsfasern und dem ausgehärteten Kunststoff besteht.

Aus diesem Band werden schließlich in einer Schneidstation automatisch die Fingernagel-Tips herausgeschnitten. Hierzu sind dem Fachmann eine Vielzahl von Schneidverfahren bekannt. Zu Gunsten einer möglichst wirtschaftlichen Herstellung der Fingernagel-Tips kann ein derartiger Schneidvorgang beispielsweise mithilfe eines Stanzwerkzeugs erfolgen. Dabei kann entweder eine oszillierende Stanze verwenden werden oder ein Stanzrad, welches an seinem Umfang mit mehreren Stanzwerkzeugen bestückt ist, so dass durch eine kontinuierliche Abrollbewegung dieses Stanzrades die Stanzvorgänge mit einer hohen Geschwindigkeit durchgeführt werden können.

Vorteilhaft kann das die Verstärkungsfasern enthaltende Band nicht nur auf einer, sondern auf beiden Seiten abgedeckt werden. Die beidseitige Abdeckung der Verstärkungsfasern und des Kunststoffs bewirkt erstens, dass der Kunststoff vor Umgebungseinflüssen geschützt ist. Beispielsweise wirkt für bestimmte Kunstharze die Umgebungsluft als Inhibitor und behindert den Aushärtevorgang. Die beidseitige Abdeckung bewirkt zweitens, dass auch die Umgebung vor dem Band bzw. seinen Inhaltsstoffen geschützt wird. Beispielsweise wird so eine Anlage, welche zur Verarbeitung des getränkten Bandes vorgesehen ist, vor Verschmutzungen und Verklebungen geschützt, die ansonsten beispielsweise durch den noch nicht ausgehärteten Kunststoff erfolgen könnten und die Funktionsfähigkeit der Anlage beeinträchtigen könnten.

Wenn eine nur einseitige Abdeckung des Bandes vorgesehen ist, kann die erwähnte Inhibition beim Aushärten, die durch die Umgebungsatmosphäre bewirkt werden kann, dadurch ausgeschlossen werden, dass die Aushärtung unter Luftabschluss in einer das Band dicht umschließenden Form erfolgt, oder dass das Band mitsamt der Form in einem gegen die Umgebungsatmosphäre abgedichteten Raum bzw. Behälter erfolgt. Beispielsweise kann vorgesehen sein, das mit Kunststoff getränkte, einseitig abgedeckte Band aufzurollen und diese Rolle in einen solchen abgeschlossenen Raum bzw. Behälter einzubringen, der anschließend evakuiert oder mit einem Inertgas geflutet wird. Das anschließend von der Rolle abgezogene, lediglich einseitig abgedeckte Prepreg kann dann ausgehärtet werden, ohne die Inhibitionswirkung der Umgebungsatmosphäre befürchten zu müssen.

Rein beispielhaft wird nachfolgend stets eine Verfahrensweise beschrieben, bei welcher die Verstärkungsfasern beidseitig abgedeckt werden, ohne dass der vorliegende Vorschlag auf diese beidseitige Abdeckung eingeschränkt wäre.

Vorteilhaft können die Verstärkungsfasern als Rollenware bereitgestellt werden, so dass das Band von der Rolle abgezogen wird. Gleichermaßen können auch die beiden Abdeckungen als Rollenware bereitgestellt und jeweils von der Rolle abgezogen werden. Auf diese Weise wird eine möglichst kontinuierliche und gleichmäßige Arbeitsweise unterstützt, und wenn die Rolle als bremsbare oder angetriebene Spannrolle ausgestaltet ist, lässt sich die im Band herrschende Spannung optimal regeln.

Für das aus Verstärkungsfasern bestehende Band kann die Spannungsregelung beispielsweise sicherstellen, dass eine vorbestimmte Höchstspannung im Band nicht überschritten wird, so dass dieses Band nicht überlastet und beschädigt wird.

Für die ein- oder beidseitigen Abdeckungen kann mittels der Spannungsregelung ebenfalls deren Überlastung vermieden werden. Zusätzlich jedoch kann insbesondere die Spannung beider Abdeckung möglichst gleich eingestellt werden, so dass ein Verzug und eine unerwünschte Verformung des dreischichtigen Prepegs vermieden wird. In diesem richtet sich die zulässige Höchstspannung einer Abdeckung nach der Spannung, die momentan die andere Abdeckung aufweist.

Vorteilhaft kann die Aufbringung des Kunststoffs indirekt erfolgen: In diesem Fall wird der Kunststoff nicht direkt auf das Band aus Verstärkungsfasern aufgegeben, sondern vielmehr auf eine der beiden Abdeckungen. Anschließend werden die Verstärkungsfasern in Kontakt mit der Seite der Abdeckung gebracht, die mit dem Kunststoff versehen ist. Beispielsweise kann vorgesehen sein, eine von einer Rolle abgezogene, bandförmige Abdeckung auf ihrer Oberseite mit dem Kunststoff zu versehen und anschließend das Band aus Verstärkungsfasern auf diese mit Kunststoff versehen Seite der Abdeckung aufzulegen.

Die indirekte Beschichtung ermöglicht eine präzise Dosierung des Kunststoffs, weil die zu beschichtende Trägerfolie in wesentlich einheitlicherer Dicke zur Verfügung steht, als das aus den Verstärkungsfasern bestehende Band. Eine vollständige Durchtränkung der Verstärkungsfasern wird dadurch ermöglicht, dass diese an die Abdeckung angedrückt und dabei in den noch flüssigen Kunststoff gedrückt werden. Besonders schonend können die Verstärkungsfasern auf den flüssigen Kunststoff einheitlicher Dicke ohne Druck abgelegt werden, wobei sie sich selbstständig vollsaugen.

Eine präzise Dosierung des Kunststoffs kann dadurch erfolgen, dass der Auftrag auf die Abdeckung mithilfe einer Streichwalze erfolgt. Die Streichwalze weist dabei in an sich bekannter Weise einen einstellbaren Streichspalt auf, so dass die Menge des Kunststoffs sehr präzise eingestellt werden kann. Im Unterschied zu Sprühverfahren bewirkt ein solcher Streichauftrag des Kunststoffs auf die Abdeckung eine präzise Dosierung auch bei wechselnden äußeren Umgebungseinflüssen. Beispielsweise kann durch die Außentemperatur die Viskosität des Kunststoffs beeinflusst werden, so dass bei einem Sprühauftrag des Kunststoffs durch eine vergleichsweise kleine Sprühdüse die Dosierung größeren witterungsabhängigen Schwankungen unterliegt als eine Dosierung mittels des erwähnten Streichverfahrens. Durch den einstellbaren Streichspalt kann die Streichwalze schnell und problemlos auf unterschiedliche Kunststoff-Dosierungen eingestellt werden, beispielsweise in Anpassung an unterschiedliche Materialqualitäten des verwendeten Verstärkungsfaserbandes.

Vorteilhaft kann vorgesehen sein, dass das Band kalandriert wird. Um Lufteinschlüsse möglichst vollständig aus dem Band zu entfernen, bevor dieses in die Formstation und zum Aushärten des Kunststoffs gelangt, kann durch das Durchlaufen entsprechender Kalander-Walzen der Kunststoff möglichst vollständig in die Verstärkungsfasern eindringen und Luft aus den Fasern verdrängt werden. Weiterhin besteht die Möglichkeit, durch Kalandrieren überschüssigen Kunststoff zu entfernen und aufzufangen. Zur Dosierung des Kunststoffs beim Auftrag, beispielsweise bei dem erwähnten indirekten Auftrag durch die Beschichtung zunächst einer Abdeckung, kann daher eine gewisse Überdosierung bewusst vorgesehen werden, um auf diese Weise sicherzustellen, das sämtliche Bereiche der Verstärkungsfasern vollständig mit dem Kunststoff getränkt werden können. Durch diese bewusste Überdosierung des Kunststoffs können Fertigungstoleranzen der Verstärkungsfasern ausgeglichen werden und eine überall vollständige Durchtränkung der Verstärkungsfasern in einer Kalandrierstation kann sichergestellt werden.

Diese erwähnte Kalandrierung kann vorteilhaft erfolgen, bevor die zweite Abdeckung verwendet wird, so dass diese zweite Abdeckung das Austreiben von Lufteinschlüssen bei dem erwähnten Kalandriervorgang nicht behindern kann.

Zudem kann vorteilhaft ein zusätzlicher Kalandriervorgang erfolgen, nachdem das Band mit der zweiten Abdeckung abgedeckt worden ist. Auf diese Weise können Lufteinschlüsse entfernt werden, welche sich ansonsten zwischen den mit Kunststoff getränkten Verstärkungsfasern und der zweiten Abdeckung befinden könnten. Derartige Lufteinschlüsse würden zwar nicht die vollständige Durchtränkung der Verstärkungsfasern mit Kunststoff beeinträchtigen, könnten jedoch eine möglichst glatte Ausprägung der Oberfläche des herzustellenden Produktes beeinträchtigen, und da dieses Produkt insbesondere im kosmetischen Bereich angewendet wird, also in einem Bereich, in dem die Ästhetik von vordringlicher Bedeutung ist, ist auch das äußere Erscheinungsbild der herzustellenden Fingernagel-Tips von großer Bedeutung.

Zur Formung des Bandes, bevor der Kunststoff ausgehärtet wird, kann das Band im einfachsten Fall während seiner Förderbewegung über ein einteiliges Formwerkzeug gezogen werden, um auf diese Weise die Formgebung dieses Oberflächenwerkzeugs anzunehmen. Beispielsweise kann ein solches einteiliges Formwerkzeug aus einem konvex gebogenen länglichen Element bestehen, beispielsweise aus einer Stange, einem Rohr oder dergleichen, welches sich in Längsrichtung des Bandes erstreckt. Wenn das Band in Längsrichtung auf einen solchen konvexen Körper aufgelegt wird, wird das Band in seiner Längsrichtung zu einer nach unten offenen Rinne verformt, weist also quer zu seiner Längsrichtung einen gebogenen, C-förmig gewölbten Verlauf auf, und das Formwerkzeug liegt der inneren Oberfläche der Rinne an.

In ähnlicher Weise kann das Band während seiner Förderbewegung in ein rinnenförmig ausgestaltetes einteiliges Formwerkzeug hineingezogen werden, beispielsweise in das Innere eines Rohrs oder einer Rinne, so dass auch auf diese Weise das Band rinnenartig geformt wird und das Formwerkzeug der äußeren Oberfläche der Rinne anliegt.

Ein einteiliges Formwerkzeug kann auch dadurch bereitgestellt werden, dass dieses einen durchgängigen Schlitz aufweist, durch welchen das Band während seiner Förderbewegung hindurchgezogen und dabei geformt wird. Beispielsweise kann die einteilige Form aus einem Metallblock bestehen, und beispielsweise kann der Schlitz durch Funkenerosion erzeugt sein, und beispielsweise kann der Schlitz quer zur Förderrichtung des Bandes einen C-förmig gebogenen Verlauf aufweisen, und beispielsweise kann die Aushärtung des Kunststoffs in der Form thermisch erfolgen, indem der Metallblock beheizt wird und seine Wärme auf das durch ihn hindurchlaufende Band überträgt. Die Abmessungen des Schlitzes können so gewählt sein, dass eine möglichst vollflächige, beidseitige Anlage des Bandes an der Form sichergestellt ist, was die Wärmeübertragung begünstigt.

Vorteilhaft jedoch kann ein Formwerkzeug verwendet werden, welches zwei Teile aufweist:
Gemäß einer ersten vorteilhaften Ausgestaltung eines solchen Formwerkzeugs können die beiden Teile zwischen sich einen C-förmig gebogenen Spalt aufweisen, wobei die Biegung dieses C-förmigen Spalts quer zur Längsrichtung des Bandes verläuft. Auf diese Weise wird dem Band, welches sich während seiner Förderbewegung in diesem Formwerkzeug befindet, die gewünschte C-förmig gebogene, rinnenartige Kontur vermittelt.

Diese beiden Teile des Formwerkzeugs können beispielsweise beheizt sein, wenn eine thermische Aushärtung des Kunststoffs vorgesehen ist; andernfalls können sie beispielsweise strahlungsdurchlässig ausgestaltet sein, beispielsweise aus einem transparenten Kunststoff, aus Glas, oder aus einer für die jeweilige Strahlung durchlässigen Keramik, wenn der Kunststoff photochemisch durch Strahlung ausgehärtet werden soll.

Die beiden Teile des Formwerkzeugs können still stehend angeordnet sein, so dass das Band gleitend durch den C-förmigen Spalt gezogen wird. Wenn das Band beidseitig abgedeckt ist, kann die Abdeckung die gewünschten Gleiteigenschaften gegenüber dem Formwerkzeug sicherstellen. Alternativ dazu können die beiden Teile des Formwerkzeugs drehbar als Rollen oder Walzen ausgestaltet sein, die zwischen sich den C-förmigen Spalt schaffen und durch welche das Band je nach Umfangsgeschwindigkeit der Rollen reibungsarm oder sogar reibungsfrei hindurchgezogen werden kann.

Die Zweiteiligkeit der Form ermöglicht eine Prozessführung, bei welcher die Spaltweite veränderlich ist und beispielsweise an Fertigungstoleranzen des Bandes angepasst werden kann. So kann einerseits eine optimale Formgebung und gegebenenfalls auch Wärmeübertragung ermöglicht werden, indem die beiden Formteile dem durch die Form hindurchlaufenden Band so eng wie möglich anliegen. Andererseits kann durch einen ausreichend großen Abstand der beiden Formteile der Durchzugswiderstand, den die Form für das Band schafft, so gering gehalten werden, dass eine Überlastung des Bandes vermieden wird, die ansonsten zu unkontrollierten Verformungen oder zu mechanischen Schäden des Bandes führen könnte.

Dabei kann vorgesehen sein, dass das Formwerkzeug einstellbar ist, so dass die Spaltweite veränderlich ist und auf unterschiedliche Werte eingestellt werden kann, die dann allerdings fest beibehalten werden bis zu einer nächsten Verstellung des Formwerkzeugs. Alternativ dazu kann vorgesehen sein, dass sich die erforderliche Spaltweite des C-förmigen Spalts kontinuierlich und automatisch anpasst, wenn das Band durch das Formwerkzeug hindurch gezogen wird, beispielsweise indem die beiden Teile des Formwerkzeugs durch Federkraft aneinander gedrückt werden oder ein oberer Teil des Formwerkzeugs durch sein Eigengewicht auf einem unteren Teil aufliegt. In diesem Fall drückt das Band die beiden Teile des Formwerkzeugs auseinander und bestimmt so die Spaltweite, die andererseits auch durch die Federkraft bzw. das Eigengewicht bestimmt wird und somit konstruktiv beeinflusst werden kann.

Als weitere Alternative einer Formstation, deren Formwerkzeug zwei Teile aufweist, kann vorgesehen sein, dass die beiden Teile des Formwerkzeugs in Form von Führungsrollen ausgestaltet sind, die im Abstand zueinander und in Längsrichtung des Bandes hintereinander angeordnet sind. Entlang dem äußeren Umfang sind diese beiden Führungsrollen konvex oder konkav profiliert, so dass der Abschnitt des Bandes zwischen diesen beiden Führungsrollen eine Rinne bildet. Da zwischen diesen beiden Führungsrollen dem Band keine weiteren Bauteile des Formwerkzeugs anliegen müssen, ist das Band in diesem Bereich besonders einfach zugänglich, um die Aushärtung des Kunststoffs während der Förderbewegung des Bandes zu ermöglichen.

Die baulichen Abmessungen des Formwerkzeugs und die Fördergeschwindigkeit des Bandes beeinflussen die Zeit, die zum Aushärten des Kunststoffs zur Verfügung steht. Eine möglichst lange Einwirkzeit kann dadurch ermöglicht werden, dass das Formwerkzeug in Förderrichtung des Bandes mitbewegt wird, so dass auf diese Weise im Vergleich zu einem stillstehenden, gleich großen Formwerkzeug die Zeit verlängert werden kann, während welcher das Band seine gewünschte Form einnimmt, die ihm durch das Formwerkzeug vermittelt wird. Die Relativgeschwindigkeit zwischen dem Formwerkzeug und dem Band wird auf diese Weise verringert im Vergleich zu der Relativgeschwindigkeit, die das Band gegenüber einem stillstehenden Formwerkzeug aufweisen würde, nämlich der Fördergeschwindigkeit des Bandes.

Vorteilhaft kann dabei vorgesehen sein, dass das Formwerkzeug im Wesentlichen mit derselben Geschwindigkeit bewegt wird, wie sie auch das Band aufweist, also mit der Fördergeschwindigkeit des Bandes. Auf diese Weise kann eine Relativgeschwindigkeit zwischen dem Band und dem Formwerkzeug im Wesentlichen vermieden werden und im Optimalfall, wenn nämlich die Geschwindigkeit, mit welcher das Formwerkzeug bewegt wird, genau der Fördergeschwindigkeit des Bandes entspricht, kann eine Relativgeschwindigkeit zwischen dem Band und dem Formwerkzeug vollständig vermieden werden. Ohne Relativgeschwindigkeit zwischen dem Band und dem Formwerkzeug kann beispielsweise eine starke Pressung erfolgen, da diese aufgrund des "mitlaufenden" Formwerkzeugs keinen unzulässig hohen Durchzugswiderstand bewirkt. Dadurch kann beispielsweise eine besonders intensive Wärmeübertragung von der Form auf das Band und somit eine besonders kurze Aushärtezeit ermöglicht werden. Auch ermöglicht die Pressung eine dreidimensionale Formgebung des Bandes, so dass einzelne Bandabschnitte wie ein natürlicher Fingernagel in Längs- und Querrichtung gekrümmt geformt werden können.

Die Beweglichkeit des Formwerkzeugs kann beispielsweise dadurch ermöglicht werden, dass zwei Formteile das Band zwischen sich aufnehmen und dass diese beiden Formteile gemeinsam mit dem Band transportiert werden. In einem diskontinuierlichen Verfahren können diese Formteile anschließend in ihre Ausgangsstellung zurückbewegt werden, dem noch nicht geformten Band angelegt und anschließend mit diesem wie beschrieben bewegt werden. Alternativ jedoch kann vorgesehen sein, dass die Formteile vergleichsweise kurz ausgestaltet sind und mehrere Formteile hintereinander angeordnet sind, so dass die beiden Teile des Formwerkzeugs ähnlich wie umlaufende Ketten eines Kettenfahrzeugs ausgestaltet sind. Der jeweils dem Band anliegende Abschnitt eines solchen Teils wird mit der Fördergeschwindigkeit des Bandes bewegt und auf diese Weise wird ein kontinuierlicher Herstellungsprozess unterstützt, bei welchem das Band kontinuierlich durch die Formstation bewegt werden kann. Auch die beiden erwähnten und voneinander beabstandeten Führungsrollen, die zum Formen des Bandes verwendet werden können, können vorteilhaft drehbar gelagert sein oder drehangetrieben sein, so dass sie an die Fördergeschwindigkeit des Bandes angepasst werden können und an der Kontaktstelle zwischen der jeweiligen Führungsrolle und dem Band keine Relativbewegung erfolgt.

Durch die Verringerung oder Vermeidung der Relativgeschwindigkeit zwischen dem Formwerkzeug und dem Band werden die aufzubringenden Kräfte, um das Band durch die Formstation zu bewegen, verringert und das Band dementsprechend mechanisch geschont. Zudem werden Reibungen und daraus ggf. resultierende Verwerfungen des Bandes, die zu dessen Qualitätsbeeinträchtigung führen könnten, bei einer Verringerung oder Vermeidung der Relativgeschwindigkeit zwischen Band und Formwerkzeug so weit wie möglich ausgeschlossen.

Wenn der Kunststoff thermisch ausgehärtet wird, wie weiter oben bereits angesprochen, so kann vorteilhaft vorgesehen sein, dass das Formwerkzeug beheizt wird. Auf diese Weise lässt sich eine optimale und besonders zuverlässige Formung des Bandes sicherstellen, indem nämlich das Formwerkzeug dem Band möglichst von beiden Seiten anliegt und damit eine besonders definierte und präzise Formgebung des Bandes bewirkt, wobei gleichzeitig das Formwerkzeug aufgrund seiner Beheizung zur thermischen Aushärtung des Kunststoffs beiträgt und eine möglichst verlustarme Beheizung des Kunststoffs auf möglichst kurzem Wege ermöglicht.

Wenn der Kunststoff mittels einer Strahlung ausgehärtet wird, wie weiter oben ebenfalls bereits angesprochen, so kann dies entweder eine Wärmestrahlung sein oder beispielsweise eine Ultraviolettstrahlung oder eine Strahlung im Bereich des blauen Lichts. Durch diese energiereiche Strahlung kann die Aushärtung des Kunststoffs in möglichst kurzer Zeit erfolgen. In diesem Fall ist wenigstens eine der beiden Abdeckungen für diese Strahlung durchlässig, nämlich die Abdeckung, welche dieser Strahlung zugewandt ist. Vorteilhaft kann eine besonders schnelle Aushärtung des Kunststoffs dadurch erfolgen, dass beide Abdeckungen für die Strahlung durchlässig sind und das Band von beiden Seiten mit der die Aushärtung bewirkenden Strahlung beaufschlagt wird.

Vorteilhaft ist dabei die Abdeckung nicht nur für die verwendete Strahlung durchlässig, sondern auch gegen diese Strahlung beständig. Zwar kann vorgesehen sein, dass die Abdeckung sich unter Einwirkung der Strahlung auflöst, weil ja möglicherweise in dem gleichen Maße, wie die Abdeckung als Schutz entfällt, der Kunststoff seinerseits ausgehärtet ist und ein Schutz dementsprechend nicht mehr erforderlich ist. Vorteilhaft jedoch bleibt die Abdeckung nach wie vor bestehen, so dass sie an einer späteren Stelle unter kontrollieren Bedingungen vom Band entfernt und gegebenenfalls erneut verwendet werden kann.

Die erläuterten Ausgestaltungen der Formstation lassen erkennen, dass das Band von Beginn an bis hinter die Formstation kontinuierlich transportiert wird und insofern eine möglichst kontinuierliche Produktion der Fingernagel-Tips unterstützt wird. Auch in der Formstation wird das Band nach wie vor kontinuierlich weiter transportiert. Sollte die Formstation oszillierend betrieben werden, indem sie taktweise gemeinsam mit dem Band bewegt und anschließend zurückbewegt wird, findet insofern die Formung und Aushärtung selbst quasi-kontinuierlich und taktweise statt, der Weitertransport des Bandes jedoch nach wie vor kontinuierlich.

Die Entnahme des Bandes aus der Formstation kann vorteilhaft mittels einer Abzugseinrichtung erfolgen, die hinter der Formstation angeordnet ist. Dadurch, dass der Kunststoff nun ausgehärtet ist, ist das Band gegenüber mechanischen Belastungen erheblich robuster, so dass es an dieser Stelle problemlos erfasst und aus der Formstation abgezogen werden kann.

Diese erwähnte Abzugseinrichtung kann vorteilhaft als Masterantrieb dienen, so dass die Fördergeschwindigkeit des Bandes von Verstärkungsfasern sowie die Fördergeschwindigkeiten der beiden dem Band zugeführten Abdeckungen in Abhängigkeit von diesem Masterantrieb geregelt werden. Dadurch, dass das Band an dieser Stelle bereits ausgehärtet ist und dementsprechend mechanisch belastbar ist, kann es von den Rollen der Abzugseinrichtung mit hohem Anpressdruck sicher erfasst und schlupffrei transportiert werden, so dass aus diesem Grund innerhalb der gesamten Anlage vorteilhaft die Abzugseinrichtung als Masterantrieb genutzt werden kann.
Vorteilhaft kann das Band in einer Schlaufe geführt werden, nachdem die beidseitigen Abdeckungen entfernt worden sind und bevor das Band in die Schneidstation gelangt. Mittels einer Umlenkrolle wird die Schlaufe geschaffen und da die Umlenkrolle in ihrer Position veränderlich ist, kann dementsprechend die Länge der Schlaufe verändert werden. Auf diese Weise wird eine Art Puffer oder Zwischenspeicher geschaffen, bevor das Band in die Schneidstation gelangt. Wenn beispielsweise in der Schneidstation ein diskontinuierlicher Schneidvorgang erfolgt, beispielsweise mittels eines oszillierenden Stanzwerkzeugs, so kann dementsprechend das Band diskontinuierlich durch die Schneidstation geführt werden und für jeden einzelnen Schneidvorgang angehalten werden. Während dieser Zeit kann das kontinuierlich aus der Formstation abgezogene Band in dem erwähnten Puffer zwischengespeichert werden. Auch wenn in derselben Anlage nacheinander unterschiedliche Fingernagel-Tips erzeugt werden sollen und hierzu beispielsweise unterschiedliche Schneidwerkzeuge erforderlich sind, so kann während eines Wechsels des Schneidwerkzeugs der Abzug des Bandes aus der Formstation nach wie vor kontinuierlich erfolgen, wobei während dieser Zeit des Werkzeugwechsels das aus der Formstation gelangende ausgehärtete Band in dem erwähnten Puffer zwischengespeichert wird.

Zudem kann vorteilhaft die Arbeitsgeschwindigkeit des Schneidwerkzeugs in der Schneidstation in Abhängigkeit von der Position der Umlenkrolle des Puffers geregelt werden. Auf diese Weise kann das Schneidwerkzeug so langsam wie möglich betrieben werden, was energetisch sowie hinsichtlich des Werkzeugverschleißes des Schneidwerkzeugs vorteilhaft ist, und es kann so schnell wie nötig betrieben werden, um das geformte und ausgehärtete Band zu verarbeiten, ohne einen unzulässigen Stau des Bandes zu verursachen. Die Arbeitsgeschwindigkeit des Schneidwerkzeugs kann mittels einer automatischen Maschinensteuerung in an sich bekannter Weise beeinflusst werden, beispielsweise in der Art, dass zugunsten eines optimalen Scheidergebnisses der Schneidvorgang selbst mit einer stets gleichen Geschwindigkeit abläuft, das Schneidwerkzeug jedoch mit unterschiedlich langen Pausen zwischen zwei Schneidvorgängen betrieben wird. Zu diesem Zweck kann die Position der Umlenkrolle erfasst werden. Das entsprechende Signal kann beispielsweise die Eingangsgröße der erwähnten Maschinensteuerung bilden. Während sich die Umlenkrolle zwischen zwei vorgegebenen Grenzwerten bewegt, kann die Geschwindigkeit des Schneidwerkzeugs automatisch angepasst werden, um das Überschreiten eines dieser beiden Grenzwerte zu vermeiden.

Im Bereich der Schneidstation wird, wenn ein oszillierendes Schneidwerkzeug verwendet wird, diskontinuierlich gearbeitet, so dass insgesamt eine quasi-kontinuierliche Herstellung ermöglicht wird, bei welcher lediglich der Schneidvorgang am still stehenden Band erfolgt. Je mehr Verfahrensschritte kontinuierlich durchgeführt werden, desto gleichmäßiger und technisch vorteilhafter kann die Produktion erfolgen, was auch wirtschaftlich vorteilhaft ist. Die Schneidstation kann zudem abweichend von der beschriebenen, oszillierend arbeitenden Schneidvorrichtung als rotierende Schneidvorrichtung ausgestaltet sein, welche beispielsweise Schneid- oder Stanzmesser am Umfang einer Walze oder Rolle aufweist, so dass auch die Schneidstation kontinuierlich betrieben werden kann.

Vorteilhaft kann die automatische Sortierung derart ausgestaltet werden, dass die aus dem ausgehärteten Band ausgeschnittenen Fingernagel-Tips automatisch gezählt und abgepackt werden. Beispielsweise kann vorgesehen sein, dass die Tips innerhalb der Schneidstation schwerkraftunterstützt oder durch einen Luftstrom unterstützt nach unten fallen und dabei eine Lichtschranke passieren, so dass die Anzahl der hergestellten Fingernagel-Tips automatisch gezählt wird. Sobald eine vorgegebene Anzahl von Fingernagel-Tips in einen Behälter gefallen ist, kann automatisch ein Wechsel des Behälters erfolgen, so dass stets eine vorgegebene Anzahl von Fingernagel-Tips in dem bereitgestellten Behälter gesammelt wird, bevor dieser die Schneidstation verlässt. Dieser gefüllte Behälter wird dann vorzugsweise automatisch abgepackt, so dass auf wirtschaftliche Weise eine Vielzahl von Fingernagel-Tips versandfertig bereitgestellt werden kann.

Unterschiedliche Fingernagel-Tips können dadurch geschaffen werden, dass bei gleichem Krümmungsradius des Bandes unterschiedlich große Tips aus dem ausgehärteten Band ausgeschnitten werden. Zudem kann das Band in unterschiedlichen Krümmungsradien quer zu seiner Längsrichtung geformt werden, so dass bereits durch diese beiden Parameter des Krümmungsradius und der Größe eine Vielzahl von unterschiedlichen Fingernagel-Tips bereitgestellt werden kann, die eine optimale Anpassung an einen jeweils vorhandenen natürlichen Nagel ermöglicht. Wenn wie beschrieben - beispielsweise mittels mitlaufender Formwerkzeuge - das Band auch in seiner Längsrichtung geformt wird, gegebenenfalls in unterschiedlichen Krümmungsradien, kann diese Vielzahl erheblich vergrößert und die Anpassung der Tips an natürliche Nagelformen weiter verbessert werden.

Dabei kann zu Gunsten einer möglichst wirtschaftlichen Fertigung vorgesehen sein, dass mehrere Formwerkzeuge und / oder mehrere Schneidwerkzeuge in einer Produktionsanlage für Fingernagel-Tips bevorratet werden und dass entweder das Formwerkzeug und / oder das Schneidwerkzeug gegen ein entsprechendes Werkzeug mit unterschiedlicher Geometrie ausgewechselt wird. Auf diese Weise können aus demselben ursprünglich bereitgestellten Band von Verstärkungsfasern unterschiedlich geformte Fingernagel-Tips, also Tips mit unterschiedlichen Krümmungsradien und / oder unterschiedlicher Größe hergestellt werden.

Vorteilhaft kann für den Anwender, nämlich ein Kosmetikstudio, ein Satz unterschiedlicher Fingernagel-Tips bereitgestellt werden. Hierzu können mehrere Anlagen vorgesehen sein, die parallel betrieben werden und in denen beispielsweise die Bänder zu unterschiedlichen Krümmungsradien geformt werden. Durch den Wechsel des Schneidwerkzeugs an jeder dieser Anlagen können zudem weitere Differenzierungen der unterschiedlich ausgestalteten Fingernagel-Tips erfolgen. Unter jeder derartigen Anlage, d. h. unter jeder einzelnen Schneidstation, kann jeweils vollautomatisch ein Sortimentskasten, der mehrere Fächer aufweist, positioniert werden, so dass je nach Querschnittskrümmung und Größe der Fingernagel-Tips die erzeugten Fingernagel-Tips in bestimmte Fächer dieser Sortimentskästen gefördert werden, wobei eine automatisierte Förderungseinrichtung die Sortimentskästen stets derart unter den Schneidstationen positioniert, das ein bestimmter Typ von Fingernagel-Tips in einem bestimmten Fach des jeweiligen Sortimentskasten abgelegt wird. Abgesehen davon, dass mehrere gleichartige Anlagen parallel betrieben werden können, um gleichzeitig eine Mehrzahl der Fingernagel-Tips herstellen zu können, kann auch vorgesehen sein, das von der Rolle gelangende Band aus Verstärkungsfasern in mehrere parallele Streifen aufzutrennen und auf derselben Anlage diese mehreren Streifen nebeneinander gleichzeitig zu verarbeiten. Auf diese Weise kann die Produktionskapazität dementsprechend vervielfacht werden bei gleichzeitig möglichst wirtschaftlicher Ausgestaltung der dazu benötigten Anlage und bei einem dementsprechend geringeren Platzbedarf als wenn mehrere völlig separate Anlagen errichtet werden würden.

Grundsätzlich kann vorgesehen sein, dass das erwähnte Band, welches zunächst ausschließlich aus den Verstärkungsfasern und anschließend auch aus Kunststoff und den beiden Abdeckungen besteht, so schmal ausgestaltet ist, dass lediglich ein einziger Fingernagel-Tip aus diesem schmalen Band herausgeschnitten werden kann, so dass lediglich durch die Länge des Bandes die Herstellung mehrerer Fingernagel-Tips in Bandrichtung hintereinander erfolgen kann.

Abgesehen davon kann allerdings auch vorgesehen sein, das Band breiter auszugestalten, so dass gleichzeitig mehrere Fingernagel-Tips nebeneinander hergestellt werden können.

Bei den Verstärkungsfasern kann es sich bevorzugt um Polyesterfasern, Glasfasern oder Nylonfasern handeln. Diese ermöglichen, insbesondere wenn als Kunststoff ein transparent aushärtendes Kunstharz verwendet wird, dass die Verstärkungsfasern innerhalb des transparenten Kunststoffs praktisch unsichtbar sein können und somit Fingernagel-Tips hergestellt werden, die nahezu transparent sind und in denen die Verstärkungsfasern kaum sichtbar sind. Zwar werden durch den späteren Aufbau des künstlichen Fingernagels, beispielsweise mit Hilfe eine aushärtenden Gels, und durch eine anschließende Lackierung oder ähnliche Veredelung des künstlichen Fingernagels die Fingernagel-Tips ohnehin abgedeckt, jedoch kann es insbesondere bei längeren, über die Fingerkuppen vorstehenden Fingernägeln vorteilhaft sein, wenn auch beim Blick auf die Unterseite des Fingernagels, nämlich in diesem Fall auf die Unterseite des künstlichen Fingernagels, also des Fingernagel-Tips, die Verstärkungsfasern nicht sichtbar sind.

Die Verstärkungsfasern können vorteilhaft in Form eines Gewebes vorliegen, so dass im Vergleich zu einem Vlies oder zu einer Matte aus ungerichteten Fasern möglichst konstante Materialqualitäten des Bandes aus Verstärkungsfasern vorliegen, was eine kontinuierliche und möglichst gleichmäßige Verarbeitung dieses Bandes erleichtert.

Da die Fingernagel-Tips ohnehin durch eine anschließende Beschichtung mit beispielsweise einem aushärtenden Gel überdeckt werden, können die Fingernagel-Tips vorteilhaft möglichst dünn hergestellt werden, was ihre Verformbarkeit erleichtert und somit eine optimale Anpassung der Fingernagel-Tips an den jeweils vorhandenen natürlichen Fingernagel erleichtert. Daher kann das Band aus Verstärkungsfasern vorteilhaft in einer Materialqualität von 15 bis 200 g/m² vorliegen und in einer Dicke von 0,02 bis 0,2 mm. Typischerweise kann dieses Gewebe eine Materialstärke, also eine Dicke, von 0,05 mm aufweisen.

Abgesehen davon, dass der Kunststoff mit den Verstärkungsfasern durch den beschriebenen indirekten Auftrag erfolgen kann, kann der Kunststoff auf das Material der Verstärkungsfasern aufgesprüht werden bzw. durch einen Rakel- oder Messerauftrag direkt auf die Verstärkungsfasern erfolgen, oder durch einen Walzenauftrag oder, wie angedeutet durch ein Tauchverfahren / Foulardieren erfolgen. Bei all den genannten Beschichtungsverfahren kann, wie weiter oben für das bevorzugte Verfahren ausführlich beschrieben, der Auftrag des Kunststoffs auf die Verstärkungsfasern indirekt erfolgen, d. h., dass mit einem der genannten Auftragsverfahren der Kunststoff nicht auf die Verstärkungsfasern aufgetragen wird, sondern auf einen Zwischenträger, beispielsweise eine der beiden genannten Abdeckungen und dass anschließend die Verstärkungsfasern mit dem Kunststoff in Kontakt gebracht werden.

Vorteilhaft können außer den beiden erwähnten Kalandern, nämlich einerseits um die Verstärkungsfasern intensiv mit dem Kunststoff zu durchtränken, und andererseits um Lufteinschlüsse auszutreiben, nachdem die Verstärkungsfasern getränkt und auf beiden Seiten mittels einer Abdeckung geschützt sind, weitere Kalandrierstationen vorgehen seien. Auf diese Weise lässt sich einerseits besonders vorteilhaft eine möglichst konstante und optimale Materialqualität erzielen, indem nämlich je nach dem, wo die Kalandrierstationen positioniert sind, die erwähnte Durchtränkung der Verstärkungsfasern mit Kunststoff sowie das Austreiben von Lufteinschlüssen sowie ggfs. der Austrieb überschüssigen Kunststoffs aus den Verstärkungsfasern mit höchst möglicher Wirksamkeit erfolgen kann, so können beispielsweise vier Kalandrierstationen vorgesehen sein.

Die Abdeckung auf beiden Seiten des Bandes kann vorteilhaft mittels einer Schutzfolie aus Polyester erfolgen. Dieses Material lässt sich einerseits nach dem Aushärten des Kunststoffs problemlos aus dem Band heraustrennen. Zudem ist dieses Material je nach seiner Materialzusammensetzung mit einem Schmelzbereich von 220 bis 260 Grad Celsius in einem hohen Maße temperaturstabil, so dass beispielsweise eine thermische Aushärtung des in die Verstärkungsfasern eingebrachten Kunststoffs erfolgen kann ohne zu Schädigungen der beiden Abdeckungen auf beiden Seiten des Bandes zu führen.

Zudem ist eine Schutzfolie aus Polyester bei entsprechend geringer Materialstärke, die noch eine ausreichende mechanische Festigkeit sicherstellt, ausreichend transparent für beispielsweise ultraviolette Strahlung oder Strahlung im Bereich des blauen Lichts, so dass eine photochemische Aushärtung des Kunststoffs erfolgen kann.

Aufgrund der geringen Materialstärke des Bandes lässt sich das Band auch nach dem Aushärten des Kunststoffs problemlos elastisch verformen, beispielsweise indem dieses ausgehärtete Band mit seiner C-förmigen Querschnittskontur über eine außen geradlinig glatte Rolle gezogen wird und dabei während des Kontakts mit dieser Rolle aus seinem C-förmig gebogenen in einen geradlinig verlaufenden glatten Querschnitt umgeformt wird. Durch diese Verformung kann die Ablösung der beiden äußeren Abdeckungen erleichtert werden, so dass eine solche Umlenkrolle mit geradliniger Umfangsfläche der Abzugsstation die für die beiden äußeren Abdeckungen vorgesehen ist, vorgeschaltet sein kann bzw. Teil einer solchen Abzugsstation sein kann. Nach dem Abziehen der beiden äußeren Abdeckungen nimmt das verbleibende Band, welches lediglich aus dem ausgehärteten Kunststoff und den Verstärkungsfasern besteht, seine rinnenartig gebogene Form mit C-förmigem Querschnitt automatisch wieder an.

Der Schneidprozess, um die Fingernagel-Tips aus dem Band herauszuschneiden, kann - wie erwähnt - vorzugsweise durch eine Stanze, beispielsweise eine oszillierende oder durch eine rotierende Stanze erfolgen. Alternativ dazu kann der Schneidprozess durch Laser- oder Wasserstrahlen erfolgen, wie dies an sich bekannt ist. Insbesondere beim Laserschneiden oder Wasserstrahlschneiden ist eine sehr kurzfristige Umstellung der Schneidkontur möglich, so dass mit möglichst kurzer Unterbrechungszeit von der einen auf die andere Formgebung der herzustellenden Fingernagel-Tips umgestellt werden kann.

Bei der Verwendung eines Stanzwerkzeugs kann vorzugsweise ein Matrizenwerkzeug eingesetzt werden, so dass die aus dem Band ausgestanzten Fingernagel-Tips mit einer optimalen Beschaffenheit ihrer umlaufenden Kante erzeugt werden können, so dass beispielsweise minimale Risse, Weißbruch oder dergleichen an der umlaufenden Kante eines Fingernagel-Tips möglichst vermieden werden können.

Weiterhin kann die Matrize als Sortierhilfe genutzt werden, indem die Tips durch die Matrize hindurch nach unten fallen und dabei geführt werden. So können die Tips zielsicher abgelegt werden, beispielsweise in einem Versandbehälter, oder in einem bestimmten Fach eines Sortimentskastens, der mehrere Fächer zur Aufnahme mehrerer unterschiedlicher Sorten von Fingernagel-Tips aufweist. Diese Funktion als Sortierhilfe wird besonders gut verwirklicht, wenn eine oszillierende Hubstanze verwendet wird und dementsprechend eine ortsfest unbeweglich verbleibende Matrize verwendet werden kann, welche eine besonders präzise Führung der Tips ermöglicht.

Als Kunststoffe, mit welchen die Verstärkungsfasern getränkt werden, kommen Epoxidharze, Acrylatharze, ungesättigte Polyesterharze oder Polyurethane in Frage. Bei diesen Kunststoffen kann ein möglichst transparenter Fingernagel-Tip sowie eine gute mechanische Stabilität bei gleichtätiger hoher Flexibilität des Fingernagel-Tips erzielt werden.

Weiter oben wurde als eine erste Möglichkeit des Herstellungsverfahrens die Möglichkeit angesprochen, das Band aus Verstärkungsfasern schmal auszugestalten, so dass in Längsrichtung des Bandes jeweils nur ein Fingernagel-Tip nebeneinander und die einzelnen Fingernagel-Tips in Längsrichtung des Bandes ausschließlich hintereinander erzeugt werden. Alternativ dazu wurde beschrieben, dass das Band aus Verstärkungsfasern breiter gewählt sein kann, und anschließend in mehrere schmale Streifen aufgetrennt wird, die dann - wie beschrieben - mit Kunststoff getränkt, beidseitig abgedeckt, geformt und ausgehärtet werden, so dass auf diese Weise gleichzeitig mehrere schmale Streifen hergestellt werden, die jeweils eine einzige Reihe von Fingernagel-Tips ergeben. Als eine weitere Möglichkeit für die Herstellung derartiger schmaler Streifen kann vorgesehen sein, zunächst ein breites Band von Verstärkungsfasern mit Kunststoff zu tränken. Dieses breite Band über seine gesamte Breite beidseitig abzudecken und erst dann dieses so genannte "Prepreg" in mehrere schmale Streifen aufzutrennen, die dann geformt und ausgehärtet werden.

Wenn das Band, bestehend aus den Verstärkungsfasern, die mit Kunststoff getränkt sind, sowie aus den beidseitigen Abdeckungen, durch eine ortsfest verbleibende Form gezogen wird, nämlich durch einen von der Form gebildeten gebogenen Spalt, so wird dabei das Band ausschließlich quer zu seiner Längsrichtung geformt. Wenn jedoch das Formwerkzeug mit dem Band mit bewegt wird, beispielsweise indem das Formwerkzeug als Schlitten ausgestaltet ist, welcher oszillierend hin und her verfährt oder indem das Formwerkzeug zwei kettenartig umlaufende Bereiche aufweist, die dem Band von beiden Seiten anliegen, besteht die Möglichkeit, das Formwerkzeug auch als regelrechtes Prägewerkzeug auszugestalten, so dass das Band in zwei Richtungen verformt werden kann, nämlich wie beschrieben quer zu seiner Längsrichtung, aber auch in Längsrichtung, so dass dadurch beispielsweise die natürliche Krümmung eines natürlichen Fingernagels in dessen Wuchsrichtung nachgebildet werden kann. In diesem Fall kann das Formwerkzeug mehrere Mulden auf der einen Seite und damit korrespondierende Stempel auf der anderen Seite aufweisen, die zwischen sich einen dreidimensional gebogenen Hohlraum schaffen, in welchem das Band geformt und gehärtet werden kann.

Das vorschlagsgemäße Verfahren wird anhand einer rein beispielhaft und schematisch dargestellten Herstellungsanlage nachfolgend näher erläutert. Dabei zeigt
- Fig. 1: eine Seitenansicht auf eine Herstellungsanlage zum Herstellen von Fingernagel-Tips,
- Fig. 2: eine Seitenansicht auf die Schneidstation der Anlage von Fig. 1, und
- Fig. 3: eine Draufsicht auf die Schneidstation von Fig. 2.

In den Zeichnungen ist mit 1 insgesamt eine Anlage bezeichnet, die zur Herstellung von Fingernagel-Tips dient. Die Anlage 1 weist ein Maschinengestell auf, wobei zwei Maschinengestell-Teile mit 2 und 3 separat gekennzeichnet sind. Der linke, größere Teil 2 des Maschinengestells nimmt die Herstellungseinrichtungen bis zu einer Formstation und Aushärtestation auf. Aufgrund der vorgesehenen kontinuierlichen Herstellungsweise steht die bauliche Länge dieser Form- und Aushärtestation in unmittelbarem Zusammenhang damit, welche Zeit zum Aushärten des Kunststoffs zur Verfügung steht. Sollte die Aushärtung eine besonders lange Zeit benötigen, oder sollte nach der Form- und Aushärtestation eine Nachhärtestation vorgesehen werden, so ist es möglich, den rechten Teil 3 des Maschinengestells abweichend von dem dargestellten Ausführungsbeispiel nicht unmittelbar mit dem linken Teil 2 zu verbinden, sondern im Abstand davon aufzustellen, so dass dementsprechend Raum für die Aufstellung einer längeren Form- und Aushärtungsstation oder einer zusätzlichen Nachhärtestation bereit steht.

Das Maschinengestell 2, 3 trägt eine erste Spannrolle 4, die eine Rolle 5 einer Polyesterfolie aufnimmt, wobei die Polyesterfolie von der Rolle 5 abgezogen wird und als Abdeckung 6 dient, wie später näher erläutert werden wird. Die bremsbare Spannrolle 4 ermöglicht es, die Spannung innerhalb der Abdeckung 6 einzustellen.

Mit 7 ist eine Streichwalze schematisch angedeutet. Mittels dieser Streichwalze 7 wird ein flüssiger Kunststoff auf das Band 6 aufgetragen. Die Streichwalze 7 weist ein pneumatisch anstellbares Streichmesser auf. Die Streichwalze 7 ist angetrieben, so dass unzulässige Spannungen in der Abdeckung 6 vermieden werden. Als Kunststoff wird ein flüssiges Kunstharz verwendet, welches auf die Abdeckung 6 aufgetragen wird. Die Messung des Streichspalts an der Streichwalze 7 und damit die Dosierung des Kunststoffs wird mittels zweier digitaler Messuhren überwacht, welche den Streichspalt messen. Sowohl die Messgenauigkeit als auch die Ablesegenauigkeit dieser beiden Messuhren ermöglicht die mikrometergenaue Dosierung des Harzauftrags auf die Abdeckung 6. Da die Abdeckung 6 als Polyesterfolie ausgestaltet ist und diese Folie eine glatte Oberfläche und sehr geringe Dickentoleranzen aufweist, kann die Dosierung des Kunststoffs äußerst präzise eingestellt werden.

Die Verstärkungsfasern liegen ebenfalls als Rollenware vor, wobei diese Rolle mit 8 gekennzeichnet ist. Von der Rolle 8 werden die Verstärkungsfasern als Band 9 abgezogen. Diese Rolle 8 ist auf einer antriebsgeregelten Spannrolle gehalten. Dies ermöglicht es, die Spannung innerhalb des Bandes 9 einzustellen, so dass der empfindliche Verbund von Verstärkungsfasern nicht durch eine Überlastung des Bandes 9 mechanisch zerstört wird. Von der Rolle 8 wird das Band 9 zu einem ersten Kalander 10 geführt, der eine motorisch angetriebene Walze aufweist. An dieser Kalandrierstation findet eine Verpressung des Bandes 9 aus Verstärkungsfasern einerseits mit der Abdeckung 6 und dem darauf befindlichen flüssigen Kunststoff andererseits statt, so dass an diesem Kalander 10 die Verstärkungsfasern vollständig mit dem flüssigen Kunststoff durchtränkt werden.

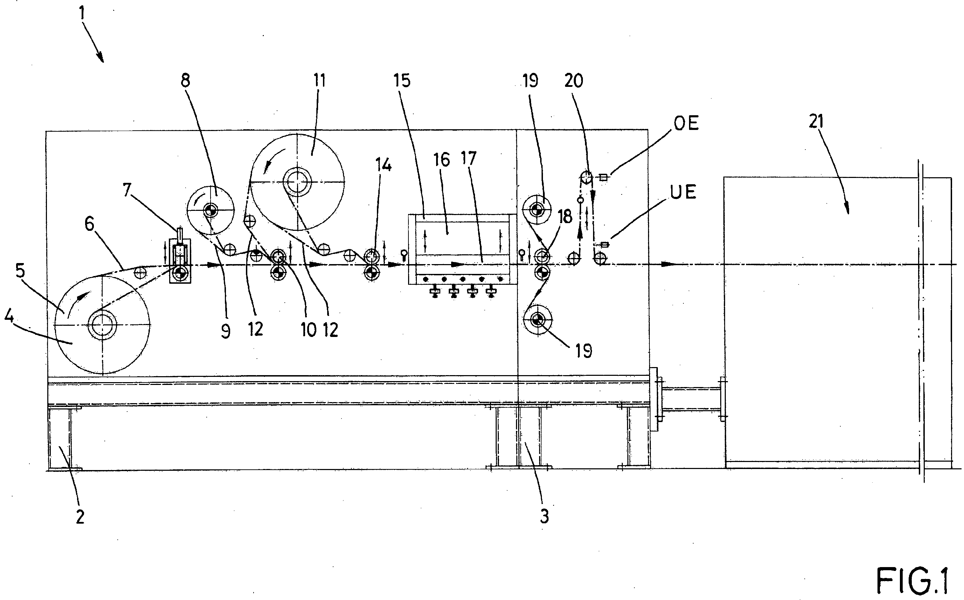

Eine dritte Rolle 11 ist wie die erste Rolle 5 aufgebaut und gelagert. Von ihr wird eine zweite Abdeckung 12 abgezogen, die wie die erste Abdeckung 6 als Polyesterfolie ausgestaltet ist. In Fig. 1 sind zwei unterschiedliche mögliche Verläufe der Abdeckung 12 dargestellt, wenn diese von der Rolle 11 abgezogen wird: Gemäß einer ersten Variante - links dargestellt - wird die Abdeckung 12 von der Rolle 11 zum Kalander 10 geführt, so dass der Kalander 10 in einem einzigen Arbeitsschritt sowohl die Tränkung der Verstärkungsfasern mit dem Kunststoff bewirkt als auch das Anlegen der oberen Abdeckung 12 an das Band 9 aus Verstärkungsfasern.

Gemäß einer zweiten Variante - weiter rechts dargestellt - gelangt die Abdeckung 12 von der Rolle 11 zu einem zweiten Kalander 14, so dass der erste Kalander 10 zum Tränken des Bandes 9 mit dem Kunststoff dient und erst am zweiten Kalander 14 die obere, zweite Abdeckung 12 auf das Band 9 aufgelegt wird.

Abweichend von dem dargestellten Ausführungsbeispiel können außer den beiden dargestellten Kalandrierstationen mit den Kalandern 10 und 14 weitere Kalandrierstationen vorgesehen sein, beispielsweise insgesamt vier Kalandrierstationen, so dass besonders zuverlässig das Band 9 aus Verstärkungsfasern mit Kunststoff vollständig durchtränkt wird, überschüssiger Kunststoff aus dem Band 9 herausgepresst wird und die beiden Abdeckungen 6 und 12 ohne Lufteinschlüsse dem mit Kunststoff getränkten Band 9 anliegen.

Nachdem die beidseitigen Abdeckungen 6 und 12 den getränkten Verstärkungsfasern angelegt sind, gelangt dieses nun insgesamt aus drei Schichten bestehende Band 9 in eine Form- und Aushärtestation, die kurz als Formstation 15 bezeichnet wird. Durch zwei vertikale Doppelpfeile ist angedeutet, dass zwei Formhälften vorgesehen sind, von denen die obere höhenbeweglich ist, so dass zwischen diesen beiden Formhälften ein Spalt mit einer einstellbaren Spaltbreite bzw. Spalthöhe geschaffen werden kann. Dieser Spalt weist quer zur Längsrichtung des Bandes 9 einen gebogenen Querschnitt auf, so dass dem Band 9 mitsamt den beiden Abdeckungen 6 und 12 zwischen einem oberen, höhenbeweglichen Teil 16 und einem unterem, ortsfesten Teil 17 eines entsprechenden Formwerkzeugs die gewünschte, im wesentlichen C-förmige Querschnittskontur in der Formstation 15 vermittelt wird.

In der Formstation 15 erfolgt auch die Aushärtung des Kunststoffs, beispielsweise durch thermische Vernetzung oder durch eine photochemische Vernetzung. Im Falle der photochemischen Aushärtung sind wenigstens einer, vorzugsweise jedoch die beiden Teile 16 und 17 des Formwerkzeugs für die verwendete Strahlung durchlässig, und im Falle der thermischen Aushärtung des Kunststoffs sind einer oder die beiden Teile des Formwerkzeugs für die Wärme entweder durchlässig oder, als bevorzugte Ausführung, selbst beheizt.

In Förderrichtung des Bandes 9 ist hinter der Formstation 15 eine Abzugsstation 18 mit einer motorisch angetriebenen Abzugs-Doppelwalze dargestellt, wobei diese Abzugsstation als Masterantrieb der gesamten Anlage 1 ausgestaltet ist. Dieser Masterantrieb steuert die Drehgeschwindigkeiten der übrigen verwendeten motorisch angetriebenen Rollen wie an der Rolle 8, der Streichwalze 7 und den Kalandern 10 und 14.

Die Abzugsstation 18 kann zwei Walzen aufweisen, deren Umfangsflächen eine geradlinige Kontur aufweisen, so dass das in der Formstation 15 rinnenartig geformte Band 9 elastisch verformt wird, wenn es in die Abzugsstation 18 gelangt. Durch diese Verformung lassen sich die beiden Abdeckungen 6 und 12 leichter von der mittleren Schicht des Bandes entfernen, nämlich von den Verstärkungsfasern, die mit dem ausgehärteten Kunststoff durchtränkt und geformt sind. Die beiden Abdeckungen 6 und 12 werden auf zwei Aufwickeltrommeln 19 aufgewickelt, wobei entweder diese aufgewickelten Polyesterfolien anschließend sortenrein recycelt werden können oder erneut verwendet werden können, indem beispielsweise diese beiden aufgewickelten Rollen auf die Spannrollen gesetzt werden, wo sie die in Fig. 1 dargestellten Rollen 5 und 11 ersetzen, nachdem die Abdeckungen 6 und 12 von diesen Rollen 5 und 11 vollständig abgezogen worden sind. Anschließend an die Abzugsstation 18 besteht das Band 9 nur noch aus den geformten Verstärkungsfasern und dem ausgehärteten Kunststoff.

In Förderrichtung hinter der Abzugsstation 18 ist ein Puffer mit einer Umlenkrolle 20 vorgesehen, wobei die Umlenkrolle 20 positionsveränderlich ist und vertikal auf und ab bewegt werden kann. Die Position der Umlenkrolle 20 bestimmt dementsprechend die Größe des Puffers und die darin zwischengelagerte Länge des Bandes 9, wobei die Umlenkrolle 20 zwischen einer oberen Endlage OE und einer unteren Endlage UE in der Höhe verstellbar ist.

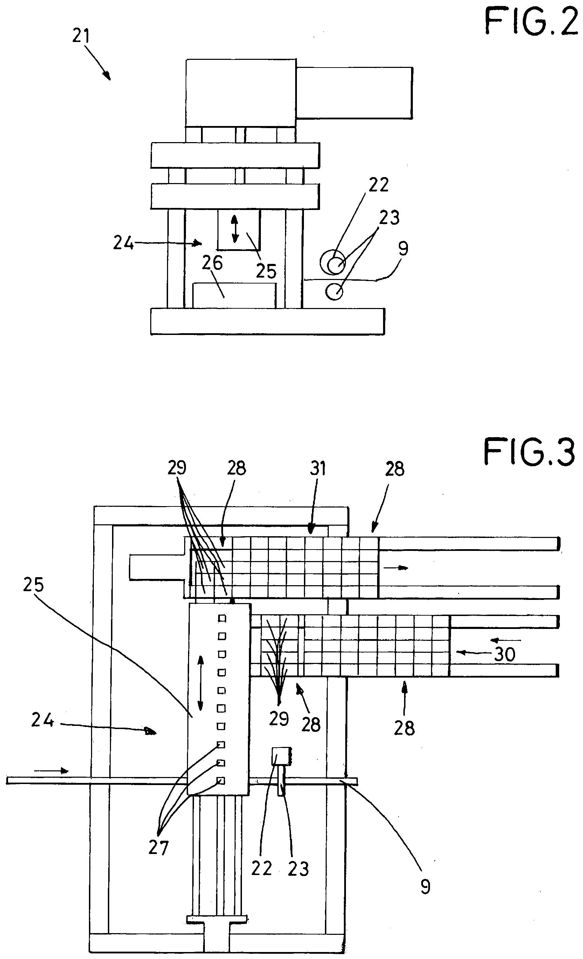

Das fertig geformte und ausgehärtete Band 9 gerät schließlich in eine Schneidstation 21, die in Fig. 1 lediglich schematisch als Rechteck angedeutet ist und anhand der Figuren 2 und 3 näher erläutert wird.

Fig. 2 zeigt die Schneidstation 21 von der Seite, in derselben Blickrichtung wie Fig. 1. Rechts ist ein Servomotor 22 angedeutet, der mit Hilfe zweier Antriebsrollen 23 das Band 9 zieht, wobei in diesem Bereich der Schneidstation 21 das verbliebene Band 9 lediglich einen Produktionsrest darstellt, nachdem nämlich die Fingernagel-Tips aus dem Band 9 herausgeschnitten worden sind.

Dieser Schneidvorgang erfolgt mittels einer Stanze 24. Die Stanze 24 ist als Matrizenwerkzeug ausgestaltet und weist ein auf und ab bewegliches, mit einem Doppelpfeil versehenes Oberteil 25 sowie ein ortsfest verbleibendes Unterteil 26 auf. Abweichend von dem dargestellten Ausführungsbeispiel kann umgekehrt vorgesehen sein, das Oberteil 25 feststehend zu lagern und das Unterteil 26 auf und ab gegen das Oberteil 25 zu führen, um auf diese Weise den Stanzvorgang durchzuführen und die Fingernagel-Tips aus dem Band herauszuschneiden. Die Fingernagel-Tips fallen entsprechend dem unterhalb der Stanze 24 dargestellten, nach unten gerichteten Pfeil schwerkraftunterstützt aus der Schneidstation 21 nach unten. Das dargestellte, fest stehende Unterteil 26 ermöglicht eine besonders zuverlässige Führung Fingernagel-Tips in eine nachgeschaltete Sortiereinrichtung. Diese fallenden Fingernagel-Tips werden aufgefangen und sortiert, wie anhand von Fig. 3 näher erläutert wird:

In Fig. 3 ist die Ansicht auf die Schneidstation 21 von oben gewählt, wobei auch in dieser Darstellung die Förderrichtung des Bandes 9 von links nach rechts verläuft. Aus dieser Blickrichtung wird deutlich, dass das Oberteil 25 der Stanze 24 eine Vielzahl einzelner, schematisch angedeuteter Stanzelemente 27 aufweist und dass dieses Oberteil 25 quer zur Richtung des Bandes 9 hin und her verfahrbar ist, wie anhand des Doppelpfeils angedeutet ist. Von den mehreren Stanzelementen 27 wird jeweils nur ein ausgewähltes Stanzelement 27 benutzt, wie anhand des vergleichsweise schmalen Bandes 9 deutlich ist. Gemeinsam mit dem Oberteil 25 kann auch das Unterteil 26 der Stanze 24 verfahren werden. Die unterschiedlich ausgestalteten Stanzelemente 27 dienen dazu, Fingernagel-Tips unterschiedlicher Größen aus dem Band 9 zu schneiden, wobei jedem Stanzelement 27 eine passgenaue Aussparung in dem Unterteil 26 zugeordnet ist.

Während eines Wechsels des verwendeten Stanzelements 27 durch Verfahren der Ober- und Unterteile 25 und 26 erfolgt die Förderbewegung des Bandes 9 vor der Schneidstation 21 kontinuierlich weiter. Während des Werkzeugwechsels innerhalb der Schneidstation 21 wird daher der Puffer des Bandes 9 vergrößert, indem die Umlenkrolle 20 nach oben bewegt wird. Nach dem Werkzeugwechsel arbeitet die Stanze 24 in der Schneidstation 21 zunächst mit einer besonders hohen Geschwindigkeit, so dass das Band 9 an den beiden Antriebsrollen 23 mit einer größeren Geschwindigkeit aus der Schneidstation 21 abgezogen werden kann als es in den Puffer mit der Umlenkrolle 20 hineinläuft. Der Bandvorrat im Puffer wird also abgebaut und dabei bewegt sich die Umlenkrolle 20 nach unten. Wenn die Umlenkrolle 20 eine vorgegebene Höhe erreicht hat, beispielsweise die untere Endlage UE, wird die Stanze 24 mit einer geringen Geschwindigkeit betrieben, beispielsweise mit einer so genannten Normalgeschwindigkeit, so dass das Band 9 in der Schneidstation 21 mit derselben Geschwindigkeit verarbeitet und mit derselben Durchlaufgeschwindigkeit durch die Schneidstation 21 bewegt wird wie durch die vorgeschalteten Stationen der Anlage 1. In diesem Fall verbleibt die Umlenkrolle 20 in ihrer Höhe.

Aus Fig. 3 ist weiterhin ersichtlich, dass eine vollautomatische Sortierung vorgesehen ist: So genannte Sortimentskästen 28 mit einer Mehrzahl einzelner Fächer 29 gelangen entsprechend den horizontal eingezeichneten Pfeilen unter die Schneidstation 21, wobei sie automatisch unter das Band 9 geführt werden, und zwar dort, wo die Fingernagel-Tips mittels der Stanze 24 aus dem Band 9 herausgeschnitten werden. Die Fingernagel-Tips fallen also in einen Sortimentskasten 28, und zwar in eine vorbestimmtes Fach 29.

Die Anzahl der Fächer 29 pro Sortimentskasten 28 kann der Anzahl der Stanzelemente 27 in der Stanze 24 entsprechen. In diesem Fall kann nach und nach ein Sortimentskasten 28 unterhalb der Schneidstation 21 derart bewegt werden, dass mit jedem Wechsel der Stanzelemente 27 die entsprechend unterschiedlichen Fingernagel-Tips jeweils sortenrein in eines der Fächer 29 des Sortimentskastens 28 fallen. Wenn sämtliche unterschiedliche Formate der Fingernagel-Tips hergestellt worden sind, in der jeweils vorgesehenen Anzahl, und dementsprechend sämtliche Fächer 29 des Sortimentskastens 28 befüllt worden sind, wird der Sortimentskasten 28 automatisch aus dem Bereich der Schneidstation 21 herausbewegt und zu einer Verpackungsstation gefördert. Dementsprechende Einlaufspeicher 30 und Auslaufspeicher 31, die jeweils mit mehreren Sortimentskästen 28 bestückt sind, sind in Fig. 3 angedeutet.

Abweichend von dem beschriebenen Vorgang kann vorgesehen sein, zugunsten möglichst seltener Werkzeugwechsel, zunächst ausschließlich eine Sorte von Fingernagel-Tips in großer Zahl herzustellen und mehrere Sortimentskästen 28 jeweils ausschließlich mit dieser Sorte von Fingernagel-Tips zu bestücken. Dabei wird jeweils nur ein bestimmtes Fach 29 eines jeden Sortimentskastens 28 mit dieser Sorte von Fingernagel-Tips bestückt. Anschließend erfolgt der Werkzeugwechsel und daraufhin werden sämtliche Sortimentskästen 28 erneut unter die Schneidstation 21 gefahren und so positioniert, dass die nun produzierte, andersartige Sorte von Fingernagel-Tips, beispielsweise Fingernagel-Tips einer anderen Größe, in ein jeweils anderes Fach 29 in jedem der Sortimentskästen 28 fallen. Auch für eine derartige Produktionsweise können die Einlaufspeicher 30 bzw. Auslaufspeicher 31 genutzt werden, um lediglich teilgefüllte Sortimentskästen 28 dort bis zu ihrer endgültigen Füllung zu lagern.

Die korrekte Dosierung der Fingernagel-Tips in den einzelnen Fächern 29 der Sortimentskästen 28 wird mittels eines automatischen Zählwerks sichergestellt, welches die aus der Schneidstation 21 fallenden Fingernagel-Tips automatisch zählt, so dass letztlich eine vollautomatische Herstellung der Fingernagel-Tips in großen Stückzahlen und einschließlich der Sortierung und Verpackung der Sortimentskästen 28 erfolgen kann.

Auch im Bereich der Formstation 15 kann ein Werkzeugwechsel vorgesehen sein, um auf diese Weise Bänder 9 mit unterschiedlichen Krümmungsradien in derselben Anlage 1 herzustellen.

## Patentansprüche

1. Verfahren zur Herstellung von Fingernagel-Tips, wobei Verstärkungsfasern mit einem Kunststoff getränkt und geformt werden
und nachfolgend der Kunststoff ausgehärtet wird, wobei die Herstellung die folgenden Schritte in der angegebenen Reihenfolge aufweist:
▪ die Verstärkungsfasern werden als Band (9) bereitgestellt und dieses Band (9) wird mit einer bestimmten Fördergeschwindigkeit in seiner Längsrichtung bewegt,
▪ das Band (9) wird mit dem Kunststoff getränkt,
▪ das Band (9) wird auf einer Seite abgedeckt,
▪ das Band (9) wird in einer Formstation (15) geformt und dabei in eine Krümmung gebogen, die im Wesentlichen einem natürlichen Finger- oder Fußnagel entspricht,
▪ der Kunststoff wird ausgehärtet, während das Band (9) in dieser gekrümmten Formgebung verbleibt,
▪ die Abdeckung (6) wird von dem Band (9) entfernt,
**dadurch gekennzeichnet,**
**dass**
▪ in der Formstation (15) das Band (9) in seiner Längsrichtung rinnenartig geformt und ausgehärtet wird,
▪ das Band (9) auch in der Formstation (15) kontinuierlich transportiert wird,
▪ nach dem Härten des Bandes die Fingernagel-Tips in einer Schneidstation (21) aus dem Band (9) herausgeschnitten werden,
▪ und die Fingernagel-Tips automatisch in einen Behälter sortiert werden.

2. Verfahren nach Anspruch 1,
**dadurch gekennzeichnet,**
**dass** das Band (9) auf seinen beiden Seiten jeweils mittels einer Abdeckung (6, 12) abgedeckt wird.

3. Verfahren nach Anspruch 1 oder 2,
**dadurch gekennzeichnet,**
**dass** die Verstärkungsfasern und / oder die Abdeckung (6, 12) als Rollenware bereitgestellt und von der Rolle (5, 8, 11) abgezogen werden.

4. Verfahren nach Anspruch 3,
**dadurch gekennzeichnet,**
**dass** die Spannung in dem von der Rolle (5, 8, 11) abgezogenen Material überwacht wird und die Abzugsgeschwindigkeit unter Berücksichtigung der gemessenen Spannung derart geregelt wird, dass die Überschreitung einer zulässigen Höchstspannung in dem jeweiligen Material vermieden wird.

5. Verfahren nach den Ansprüchen 2 und 4,
**dadurch gekennzeichnet,**
**dass** die Spannung in einer von einer Rolle (5, 11) abgezogenen Abdeckung (6, 12) derart geregelt wird, dass diese Spannung an die Spannung der anderen Abdeckung (6, 12) angeglichen wird.

6. Verfahren nach einem der vorhergehenden Ansprüche,
**dadurch gekennzeichnet,**
**dass** auf die Abdeckung (6) der Kunststoff aufgebracht wird und anschließend die Verstärkungsfasern an die mit dem Kunststoff versehene Seite der Abdeckung (6) angelegt wird.

7. Verfahren nach Anspruch 6,
**dadurch gekennzeichnet,**
**dass** der Kunststoff auf die Abdeckung (6) mittels einer Streichwalze (7) aufgetragen wird, welche einen einstellbaren Streichspalt aufweist.

8. Verfahren nach einem der vorhergehenden Ansprüche,
**dadurch gekennzeichnet,**
**dass** das Band (9) kalandriert wird, derart, dass der Kunststoff die Verstärkungsfasern im Wesentlichen vollständig durchtränkt.

9. Verfahren nach den Ansprüchen 2 und 8,
**dadurch gekennzeichnet,**
**dass** das Band (9) zur Durchtränkung kalandriert wird, bevor es mittels der zweiten Abdeckung (12) abgedeckt wird.

10. Verfahren nach einem der Ansprüche 2 bis 9,
**dadurch gekennzeichnet,**
**dass** das Band (9) kalandriert wird, nachdem es mittels der zweiten Abdeckung (12) abgedeckt worden ist, derart, dass Lufteinschlüsse, welche sich zwischen den Verstärkungsfasern und der zweiten Abdeckung (12) befinden, entfernt werden.

11. Verfahren nach einem der vorhergehenden Ansprüche,
**dadurch gekennzeichnet,**
**dass** in der Formstation (15) ein Formwerkzeug verwendet wird,
das einen C-förmig gebogenen Spalt aufweist, welcher quer zur Längsrichtung des Bandes (9) C-förmig gebogen verläuft,
und das Band (9) in diesen Spalt des Formwerkzeugs eingeführt wird,
derart, dass das Band (9) in seiner Längsrichtung rinnenartig geformt wird.

12. Verfahren nach einem der Ansprüche 1 bis 10,
**dadurch gekennzeichnet,**
**dass** in der Formstation (15) ein Formwerkzeug verwendet wird, welches zwei dem Band (9) anliegende Führungsrollen aufweist,
die in Längsrichtung des Bandes (9) im Abstand voneinander angeordnet sind,
und deren jeweiligen dem Band (9) anliegenden Umfangsfläche einen konvexen oder konkaven Querschnitt aufweisen, derart, dass das Band (9) zwischen den beiden Führungsrollen in seiner Längsrichtung rinnenartig geformt wird.

13. Verfahren nach einem der vorhergehenden Ansprüche,
**dadurch gekennzeichnet,**
**dass** in der Formstation (15) das Formwerkzeug in der Förderrichtung des Bandes (9) bewegt wird, derart, dass eine Relativgeschwindigkeit zwischen dem Band (9) und dem Formwerkzeug resultiert, welche geringer ist als die Fördergeschwindigkeit des Bandes (9).

14. Verfahren nach Anspruch 13,
**dadurch gekennzeichnet,**
**dass** das Formwerkzeug im Wesentlichen mit der Fördergeschwindigkeit des Bandes (9) bewegt wird, derart, dass eine Relativgeschwindigkeit zwischen dem Band (9) und dem Formwerkzeug im Wesentlichen vermieden wird.

15. Verfahren nach einem der vorhergehenden Ansprüche,
**dadurch gekennzeichnet,**
**dass** der Kunststoff in der Formstation (15) thermisch ausgehärtet wird.

16. Verfahren nach einem der vorhergehenden Ansprüche,
**dadurch gekennzeichnet,**
**dass** der Kunststoff in der Formstation (15) mittels einer Strahlung ausgehärtet wird.

17. Verfahren nach Anspruch 16,
**dadurch gekennzeichnet,**
**dass** eine der Strahlenquelle zugewandte Abdeckung (6, 12) vorgesehen ist, welche für die Strahlung durchlässig ist und gegen die Strahlung beständig ist.

18. Verfahren nach einem der vorhergehenden Ansprüche,
**dadurch gekennzeichnet,**
**dass** hinter der Formstation (15) eine Abzugseinrichtung (18) angeordnet ist, mittels welcher das Band (9) aus der Formstation (15) abgezogen wird.

19. Verfahren nach Anspruch 18,
**dadurch gekennzeichnet,**
**dass** die Abzugseinrichtung (18) als Masterantrieb dient und die Fördergeschwindigkeit des Bandes (9) von Verstärkungsfasern sowie die Fördergeschwindigkeiten der dem Band (9) zugeführten Abdeckung (6, 12) in Abhängigkeit von der Fördergeschwindigkeit der Abzugseinrichtung (18) geregelt werden.

20. Verfahren nach einem der vorhergehenden Ansprüche,
**dadurch gekennzeichnet,**
**dass** die Fingernagel-Tips in der Schneidstation (21) mittels eines Stanzwerkzeugs aus dem Band (9) herausgeschnitten werden.

21. Verfahren nach einem der vorhergehenden Ansprüche,
**dadurch gekennzeichnet,**
**dass** nach der Entfernung der Abdeckung (6, 12) und vor Erreichen der Schneidstation (21) das Band (9) in einer Schlaufe geführt wird,
wobei mittels einer positionsveränderlichen Umlenkrolle (20) die Länge der Schlaufe verändert wird.

22. Verfahren nach Anspruch 21,
**dadurch gekennzeichnet,**
**dass** die Arbeitsgeschwindigkeit des in der Schneidstation (21) verwendeten Schneidwerkzeugs in Abhängigkeit von der Position der positionsveränderlichen Umlenkrolle (20) geregelt wird, derart, dass die Länge der Schlaufe und die Position der Umlenkrolle (20) zwischen zwei vorgegebenen Minimal- und Maximal-Grenzwerten (OE, UE) gehalten werden.

23. Verfahren nach einem der vorhergehenden Ansprüche,
**dadurch gekennzeichnet,**
**dass** die Fingernagel-Tips automatisch gezählt und abgepackt werden.

24. Verfahren nach einem der vorhergehenden Ansprüche,
**dadurch gekennzeichnet,**
**dass** das mehrere Formwerkzeuge mit unterschiedlicher Geometrie
und / oder mehrere Schneidwerkzeuge mit unterschiedlicher Geometrie bevorratet werden,
und **dass** automatisch ein erstes Formwerkzeug gegen ein zweites, unterschiedliches Formwerkzeug ausgewechselt wird
und / oder automatisch ein erstes Schneidwerkzeug gegen ein zweites, unterschiedliches Schneidwerkzeug ausgewechselt wird,
derart, dass nacheinander unterschiedlich geformte und / oder unterschiedlich große Fingernagel-Tips hergestellt werden.

## Claims

1. Process for manufacturing fingernail tips where reinforcing fibres are saturated with a synthetic material and shaped, and the synthetic material is subsequently cured, where the manufacturing process consists of the following steps in the sequence stated:
- the reinforcing fibres are provided in strip (9) form and this strip (9) is moved at a certain transport speed in its longitudinal direction,
- the strip (9) is saturated with the synthetic material,
- the strip (9) is covered on one side,
- the strip (9) is shaped at a forming station (15), being bent to form a curve corresponding substantially to that of a natural fingernail or toenail,
- the synthetic material is cured while the strip (9) retains its curved shape,
- the cover (6) is removed from the strip (9),
**characterised in that**
- in the forming station (15) the strip (9) is formed similar to a channel in its longitudinal direction and is then cured,
- the strip (9) continues to be transported in the forming station (15),
- after the strip is cured, the fingernail tips are cut out of the strip (9) at a cutting station (21),
- and the fingernail tips are arranged automatically in a container.

2. Process in accordance with claim 1, **characterised in that** the strip (9) is covered by a cover (6, 12) on both its sides.

3. Process in accordance with claim 1 or claim 2, **characterised in that** the reinforcing fibres and/or the cover (6, 12) are provided in roll form and are drawn off the roll (5, 8, 11).

4. Process in accordance with claim 3, **characterised in that** the tension of the material being drawn off the roll (5, 8, 11) is monitored and the drawing speed is controlled with reference to the measured tension in such a way that a maximum permissible tension of the material in question is not exceeded.

5. Process in accordance with claim 2 and claim 4, **characterised in that** the tension of a cover (6, 12) being drawn off a roll (5, 11) is controlled in such a way that this tension is adjusted to match the tension of the other cover (6, 12).

6. Process in accordance with any of the preceding claims, **characterised in that** the synthetic material is applied to the cover (6) and the reinforcing fibres are subsequently laid onto the side of the cover (6) coated with synthetic material.

7. Process in accordance with claim 6, **characterised in that** the synthetic material is applied to the cover (6) by means of a coating roller (7) which has an adjustable coating gap.

8. Process in accordance with any of the preceding claims, **characterised in that** the strip (9) is calendered in such a way that the synthetic material completely saturates most of the reinforcing fibres.

9. Process in accordance with claim 2 and claim 8, **characterised in that** the strip (9) is calendered for saturation before it is covered with the second cover (12).

10. Process in accordance with any of the claims 2 to 9, **characterised in that** the strip (9) is calendered after it has been covered by the second cover (12) in such a way that inclusions of air between the reinforcing fibres and the second cover (12) are removed.

11. Process in accordance with any of the preceding claims, **characterised in that** a shaping tool is used in the forming station (15) which has a C-shaped gap positioned with the C-shaped curve at right angles to the longitudinal direction of the strip (9), and the strip (9) is fed into this gap in the shaping tool in such a way that the strip (9) is shaped like a channel in its longitudinal direction.

12. Process in accordance with any of the claims 1 to 10, **characterised in that** a shaping tool is used in the forming station (15) which has two guide rollers resting against the strip (9) which are arranged at a distance from one another in the longitudinal direction of the strip (9) each of whose circumferential surfaces resting against the strip (9) has a convex or concave cross-section in such a way that the strip (9) between the two rollers is shaped like a channel in its longitudinal direction.

13. Process in accordance with any of the preceding claims, **characterised in that**, in the forming station (15), the shaping tool is moved in the direction of transport of the strip (9) in such a way that a relative speed between the strip (9) and the shaping tool results, which is less than the speed of transport of the strip (9).

14. Process in accordance with claim 13, **characterised in that** the shaping tool is moved substantially at the speed of transport of the strip, in such a way that a relative speed between the strip (9) and the shaping tool is essentially avoided.

15. Process in accordance with any of the preceding claims, **characterised in that** the synthetic material in the forming station (15) is cured thermally.

16. Process in accordance with any of the preceding claims, **characterised in that** the synthetic material in the forming station (15) is cured by radiation.

17. Process in accordance with claim 16, **characterised in that** a cover (6, 12) facing the source of radiation is provided which is permeable to the radiation but resistant to the radiation.

18. Process in accordance with any of the preceding claims, **characterised in that** a drawing device (18) is arranged after the forming station (15) by means of which the strip (9) is drawn out of the forming station (15).

19. Process in accordance with claim 18, **characterised in that** the drawing device (18) serves as the master drive unit and the transport speed of the strip (9) is controlled by the reinforcing fibres and the transport speeds of the cover (6, 12) being fed to the strip (9) as a function of the transport speed of the drawing device (18).

20. Process in accordance with any of the preceding claims, **characterised in that** the fingernail tips are cut out of the strip (9) at the cutting station (21) by means of a punching tool.

21. Process in accordance with any of the preceding claims, **characterised in that**, after removal of the cover (6, 12) and before reaching the cutting station (21), the strip (9) is guided in a loop, where the length of the loop is varied by means of a deflection roller (20) which is variable in position.

22. Process in accordance with claim 21, **characterised in that** the working speed of the cutting tool in the cutting station is controlled with reference to the position of the variable deflection roller (20) in such a way that the length of the loop and the position of the deflection roller (20) are kept between two specified minimum and maximum limits (OE, UE).

23. Process in accordance with any of the preceding claims, **characterised in that** the fingernail tips are counted and packaged automatically.

24. Process in accordance with any of the preceding claims, **characterised in that** several shaping tools of differing geometries and/or several cutting tools of differing geometries are kept in stock and that any shaping tool can be replaced automatically by another different tool and/or any cutting tool can be replaced automatically by another different tool so that differently shaped and/or differently sized fingernail tips can be manufactured in succession.

## Revendications

1. Procédé pour la fabrication de fausses extrémités d'ongle, sachant que des fibres renforts sont imbibées d'une matière plastique et moulées, et qu'ensuite la matière plastique est durcie, sachant que la fabrication passe par les étapes suivantes, dans l'ordre indiqué :
- les fibres de renfort sont présentées sous forme de ruban (9) et ce ruban (9) est déplacé à une certaine vitesse de transit dans son sens longitudinal,
- le ruban (9) est imbibé de cette matière plastique,
- le ruban (9) est recouvert sur un côté,
- le ruban (9) est moulé dans une station de formage (15), et la courbure qui lui est ce faisant conférée correspond pour l'essentiel à celle d'un ongle de doigt ou d'orteil,
- la matière plastique est durcie tandis que le ruban (9) conserve cette forme incurvée,
- le cache (6) est retiré du ruban (9),
**caractérisé en ce que**
- dans la station de formage (15), la géométrie d'une gouttière est conférée au ruban (9) dans le sens longitudinal de ce dernier puis ce dernier est durci,
- le ruban (9) est aussi continuellement transporté dans la station de formage (15),
- après le durcissement du ruban, les fausses extrémités d'ongle sont découpées dans une station de coupe (21) pour les détacher du ruban (9),
- et que les fausses extrémités d'ongle sont automatiquement triées dans un récipient.

2. Procédé selon la revendication 1, **caractérisé en ce que** le ruban (9) est recouvert sur chacun de ses deux côtés avec un cache (6, 12).

3. Procédé selon la revendication 1 ou 2, **caractérisé en ce que** les fibres renforts et/ou les caches (6, 12) sont fournis sous forme de produit en bobine et débitées de la bobine (5, 8, 11).

4. Procédé selon la revendication 3, **caractérisé en ce que** la tension mécanique dans le matériau prélevé de la bobine (5, 8, 11) est surveillée, et que la vitesse de prélèvement est régulée, en tenant compte de la tension mécanique mesurée, de sorte à éviter de dépasser une très forte tension admissible dans le matériau respectif.

5. Procédé selon les revendications 2 et 4, **caractérisé en ce que** la tension dans un cache (6, 12) prélevé d'une bobine (5, 11) est régulée de telle sorte que cette tension soit ajustée sur la tension de l'autre cache (6, 12).

6. Procédé selon l'une des revendications précédentes, **caractérisé en ce que** la matière plastique est appliquée sur le cache (6) et qu'ensuite les fibres renforts sont appliquées sur le côté du cache (6) revêtu de la matière plastique.

7. Procédé selon la revendication 6, **caractérisé en ce que** la matière plastique est enduite sur le cache (6) au moyen d'un rouleau enducteur (7) qui présente un interstice d'enduction réglable.

8. Procédé selon l'une des revendications précédentes, **caractérisé en ce que** le ruban (9) est calandré de sorte que la matière plastique imbibe pour l'essentiel entièrement les fibres renforts.

9. Procédé selon les revendications 2 et 8, **caractérisé en ce que** le ruban (9) est calandré pour l'imbiber de part en part avant d'être recouvert au moyen du deuxième cache (12).

10. Procédé selon l'une des revendications 2 à 9, **caractérisé en ce que** le ruban (9) est calandré après avoir été recouvert au moyen du deuxième cache (12), de sorte que les inclusions d'air qui se trouvent entre les fibres renforts et le deuxième cache (12) puissent être retirées.

11. Procédé selon l'une des revendications précédentes, **caractérisé en ce que** dans la station de formage (15) est utilisé un outil de formage présentant un interstice en forme de C dont le tracé incurvé en C coupe transversalement le sens longitudinal du ruban (9), et **en ce que** le ruban (9) est introduit dans cet interstice de l'outil de formage de sorte que le ruban (9) prend la forme d'une gouttière dans son sens longitudinal.

12. Procédé selon l'une des revendications 1 à 10, **caractérisé en ce que** dans la station de formage (15) est utilisé un outil de formage qui présente deux galets de guidage appliquant contre le ruban (9), qui sont agencés dans le sens longitudinal du ruban (9) à une certaine distance l'un de l'autre et dont la surface périphérique respective appliquant sur le ruban (9) présente une section convexe ou concave de sorte que le ruban (9) se voit conférer, entre les deux galets de guidage, la forme d'une gouttière dans son sens longitudinal.

13. Procédé selon l'une des revendications précédentes, **caractérisé en ce que** dans la station de formage (15) l'outil de formage est déplacé dans le sens de transit du ruban (9), de sorte qu'il en résulte une vitesse relative entre le ruban (9) et l'outil de formage, vitesse qui est inférieure à la vitesse de transit du ruban (9).

14. Procédé selon la revendication 13, **caractérisé en ce que** l'outil de formage est déplacé essentiellement à la vitesse de transit du ruban (9), de sorte qu'est essentiellement évitée une vitesse relative entre le ruban (9) et l'outil de formage.

15. Procédé selon l'une des revendications précédentes, **caractérisé en ce que** la matière plastique est durcie thermiquement dans la station de formage (15).

16. Procédé selon l'une des revendications précédentes, **caractérisé en ce que** la matière plastique est durcie dans la station de formage (16) au moyen d'un rayonnement.

17. Procédé selon la revendication 16, **caractérisé en ce qu'**est prévu un cache (6, 12) regardant l'une des sources de rayonnement, cache qui est perméable au rayonnement et qui résiste au rayonnement.

18. Procédé selon l'une des revendications précédentes, **caractérisé en ce que** derrière la station de formage (15) est disposé un dispositif de prélèvement (18) au moyen duquel le ruban (9) est prélevé de la station de formage (15).

19. Procédé selon la revendication 18, **caractérisé en ce que** le dispositif de prélèvement (18) sert d'entraînement maître et que la vitesse de transit du ruban (9) est régulée par des fibres renforts, et que que les vitesses de transit du cache (6, 12) amené au ruban (9) sont régulées en fonction de la vitesse de transit du dispositif de prélèvement (18).

20. Procédé selon l'une des revendications précédentes, **caractérisé en ce que** les fausses extrémités d'ongle sont découpées du ruban (9) à la station de coupe (21) au moyen d'un outil de découpage à l'emporte-pièce.

21. Procédé selon l'une des revendications précédentes, **caractérisé en ce qu'**après avoir retiré le couvercle (6, 12) et avant d'atteindre la station de coupe (21), le ruban (9) est guidé dans une boucle, sachant que la longueur de la boucle est modifiée au moyen d'un galet de renvoi (20) à position variable.

22. Procédé selon la revendication 21, **caractérisé en ce que** la vitesse de travail de l'outil de coupe utilisé dans la station de coupe est régulé en fonction de la position du galet de renvoi (20) à position variable, de sorte que la longueur de la boucle et la position du galet de renvoi (20) sont maintenues entre deux valeurs limites minimale et maximale spécifiées (OE, UE).

23. Procédé selon l'une des revendications précédentes, **caractérisé en ce que** les fausses extrémités d'ongle sont automatiquement comptées et emballées.

24. Procédé selon l'une des revendications précédentes, **caractérisé en ce que** sont stockés plusieurs outils de formage présentant différentes géométries et / ou plusieurs outils de coupe présentant différentes géométries, et **en ce qu'**un premier outil de formage est automatiquement remplacé par un deuxième outil de formage différent et / ou qu'un premier outil de coupe est automatiquement remplacé par un deuxième outil de coupe différent, de sorte que sont fabriqués successivement de fausses extrémités d'ongle différemment formées et/ou de tailles différentes.
